Europäisches Patentamt

European Patent Office

Office européen des brevets

(11) Veröffentlichungsnummer: **0 250 790**
**B1**

(12) **EUROPÄISCHE PATENTSCHRIFT**

(45) Veröffentlichungstag der Patentschrift:
27.12.89

(21) Anmeldenummer: 87106738.5

(22) Anmeldetag: 08.05.87

(51) Int. Cl.⁴: **F 16 J 1/14**

(54) **Kolbenmaschine.**

(30) Priorität: 26.06.86 DE 3621421

(43) Veröffentlichungstag der Anmeldung:
07.01.88 Patentblatt 88/1

(45) Bekanntmachung des Hinweises auf die Patenterteilung:
27.12.89 Patentblatt 89/52

(84) Benannte Vertragsstaaten:
FR GB IT SE

(56) Entgegenhaltungen:
DD-A-228 011
DE-A-2 204 629

(73) Patentinhaber: **G. Düsterloh GmbH, Hauptstrasse 70, D-4322 Sprockhövel (DE)**

(72) Erfinder: **Schneeweiss, Dieter, An der Schule 6, D-8940 Memmingen- Volkratshofen (DE)**

(74) Vertreter: **Bockermann, Rolf, Patent- und Rechtsanwälte Dr.- Ing. Stuhlmann Dipl.- Ing. Willert Dr.- Ing. Oidtmann Dipl.- Ing. Bockermann Dipl.- Ing. Schneiders Bergstrasse 159 Postfach 10 24 50, D-4630 Bochum 1 (DE)**

LIBER, STOCKHOLM 1989

## Beschreibung

Die Erfindung betrifft eine Kolbenmaschine, insbesondere eine hydraulisch beaufschlagbare Kolbenmaschine, nach dem Oberbegriff des Anspruchs 1.

Es sind Kolbenmaschinen bekannt, die ähnlich wie die als Verbrennungsmotoren arbeitenden Kolbenmaschinen die Kolbenkraft über einen Bolzen auf das Pleuel und die damit verbundene Kurbelwelle übertragen (DE-A-2 204 629). Da das Pleuel nur in einer Ebene quer zur Bolzenachse schwenkbar ist, muß die Bohrung des Pleuels, in der der Bolzen des Kolbens liegt, das Pleuelauge, exakt parallel zur Kurbelwellenachse angeordnet sein, um Parallelitätsfehler und somit ein Verkanten des Kolbens im Zylinder zu vermeiden. Dies erfordert einen hohen fertigungstechnischen Aufwand. Schon bei geringen Parallelitätsfehlern zwischen Kurbelwellenachse und Achse des Pleuelauges entsteht Kantenlauf des Kolbens, was zum vorzeitigen Verschleiß und Ausfall der Maschine führt.

Zur Vermeidung dieser Nachteile hat man Lagerungen zwischen Pleuel und Kolben entwickelt, die eine mehrachsige Bewegung zwischen Kolben und Pleuel ermöglichen und etwaige Parallelitätsfehler ausgleichen können. Eine bekannte Ausführung dieser Art ist aus der Zeitschrift "asr. digest für angewandte Antriebstechnik" Heft 10, Oktober 1975, Seite 28, Bild 2 bekannt. Bei dieser Ausführung wird die Kolbenkraft über ein sphärisches Gelenk auf das Pleuel übertragen. Das sphärische Gelenk ist hierbei durch eine Kugel am Ende des Pleuelschafts gebildet, die in einer entsprechenden Kugelpfanne im Kolben gelagert ist. Auch die DD-A-228 011 zeigt eine solche Bauart.

Durch die kugelförmige Lagerung zwischen Kolben und Pleuel werden die eingangs genannten Parallelitätsfehler vermieden, so daß insgesamt geringere Anforderungen an die Fertigungsqualität gestellt sind. Die Herstellung der Maschine wird einfacher und somit billiger. Nachteilig bei dieser Ausführung ist jedoch, daß die gesamte vom Kolben auf die Kurbelwelle zu übertragende Kraft von dem Kugelgelenk zwischen Kolben und Pleuel aufgenommen werden muß. Dies führt zu hohen Flächenpressungen und somit erhöhtem Verschleiß in diesem Gelenk, insbesondere dann, wenn bei einer hydrostatischen Kolbenmaschine eine Druckmittelzuführung zur Entlastung und Schmierung der Kurbelwelle zwischen Arbeitszylinder und Kurbelwelle durch das Pleuel vorgesehen ist. Bei einer solchen Ausführung ist die Kugel im Bereich der Pleuelmittelachse abgeflacht, um das Druckmittel über eine zentrale Bohrung im Kolben und einen sich daran anschließenden Kanal im Pleuel zum Exzenter zu führen. Durch die Abflachung der Kugel, die erforderlich ist, um in jeder Stellung des Pleuels die Schmiermittelzufuhr zur Kurbelwelle zu gewährleisten, wird die Lagerfläche des Kugelgelenks verkleinert, so daß die zu übertragende Kraft über eine sphärisch ringförmige Kontaktzone übertragen wird. Hierdurch entstehen eine hohe Flächenpressung und entsprechend hohe Reibungskräfte, die den Wirkungsgrad der Kolbenmaschine merklich verringern und den Verschleiß im Gelenk erhöhen.

Ausgehend von dem letztgenannten Stand der Technik liegt der Erfindung die Aufgabe zugrunde, eine gattungsgemäße Kolbenmaschine mit konstruktiv einfachen Mitteln so witerzubilden, daß die Reibungskräfte und -momente in der sphärischen Gelenkverbindung zwischen Pleuel und Kolben vermindert werden, um den Wirkungsgrad der Maschine zu erhöhen und den Verschleiß in der Gelenkverbindung zu senken.

Die Aufgabe wird nach der Erfindung mit den im kennzeichnenden Teil des Anspruchs 1 aufgeführten Merkmalen gelöst.

Durch eine solche Ausbildung wird eine wirksame Entlastung der Gelenkverbindung zwischen dem Kolben und dem Pleuel erreicht, da ein Großteil der ursprünglich vom Kolben zu übertragenden Kraft direkt durch das Pleuel übertragen wird. Durch die Leitungsverbindung des Zylinderraums mit dem Hohlraum im Kolben wird der Kolben im Bereich seiner Ausnehmung druckentlastet, da in diesem Bereich der Druck im Zylinderraum unter Umgehung des Kolbens direkt auf das Pleuel übertragen wird. Die von der Gelenkverbindung zu übertragende Kolbenkraft wird auf eine Restkraft reduziert, die nur einem Bruchteil der auf die Kurbelwelle zu übertragenden Gesamtkraft entspricht. Die Kugelzone des Pleuels dient zur Abdichtung des Pleuels gegenüber der Ausnehmung im Kolben und hat somit eine reine Dichtfunktion und keine Tragfunktion Sie ist deshalb keinem erhöhten Verschleiß ausgesetzt. Durch die Druckentlastung des Kolbens kann die kugelförmige Lagerfläche zwischen Pleuel und Kolben mit verhältnismäßig kleinem Radius ausgebildet sein, wodurch die Reibungskräfte vermindert werden, ohne daß es zu der beim Stand der Technik bekannten hohen Flächenpressung kommt. Hierdurch wird der Wirkungsgrad der Kolbenmaschine erhöht. Außerdem ist die einfache und wirtschaftliche Herstellung hervorzuheben. Die Erfindung ist auch für kleinere Kolbendurchmesser, beispielsweise ab etwa 15 mm Durchmesser wirtschaftlich einsetzbar.

Die Ausbildung der kugelförmigen Lagerfläche kann gemäß den Ansprüchen 2, 3 oder 4 erfolgen und wird zweckmäßig auf den betrieblichen Einsatz der Maschine und die fertigungstechnisch jeweils günstigste Anordnung abgestimmt.

Bei der Ausbildung gemäß Anspruch 2 ist jeweils eine Kugelpfanne im Kolben und im Pleuel vorgesehen, in denen eine gemeinsame Stützkugel einliegt. Mithin sind zwei kugelförmige Lagerflächen gebildet. Einmal zwischen Kugelpfanne des Kolbens und Stützkugel und einmal zwischen Kugelpfanne des Pleuels und Stützkugel. Bei dieser Anordnung wird also die Schwenkbewegung zwischen Pleuel und Kolben über zwei Lagerflächen übertragen, so daß die Bewegung innerhalb eines einzelnen Lagers im Idealfall halbiert wird. Diese Ausführung ist deshalb besonders verschleißarm und vorteilhaft für hochbeanspruchte Maschinen einsetzbar.

Im Rahmen der Ausführungsform des Anspruchs 3 ist an dem zylinderraumseitig ggf. eingezogenen Kolben ein kugelförmiger Zapfen ausgebildet, der in eine Kugelpfanne innerhalb der Kugelzone des Pleuels eingreift.

Die Ausführungsform des Anspruchs 4 sieht demgegenüber einen kugelförmigen Zapfen im Zentralbereich der Kugelzone des Pleuels vor, welcher sich in einer Kugelpfanne des Kolbens abstützt.

Eine fertigungstechnisch besonders günstige Ausführungsform ergibt sich gemäß Anspruch 5, wenn die Ausnehmung im Kolben im Bereich der Kugelzone des Pleuels zylindrisch ausgebildet ist. Die dichtende Anlage der Kugelzone am zylindrischen Teil der Ausnehmung gewährleistet eine hohe Dichtwirkung, die aufgrund der linienförmigen Anlage in der Ausnehmung besonders reibungs- und verschleißarm ist.

Um sicherzustellen, daß zwischen Kolben und Pleuel nicht nur Druckkräfte, sondern auch Zugkräfte übertragen werden können, sind die Merkmale gemäß Anspruch 6 vorgesehen. Der Ansatz an der Innenwandung der Ausnehmung im Bereich des Kolbenhemds hält die Kugelzone des Pleuels formschlüssig innerhalb des Kolbens fest.

Zweckmäßig ist der Ansatz nach Anspruch 7 als umlaufender Ringwulst oder auch Ring ausgebildet, um die Kugelzone des Pleuels in jeder Schwenkstellung sicher zu halten und ein Schlagen des Pleuels innerhalb des Kolbens bei Lastwechsel zu verhindern. Vorteilhaft kann der Ringwulst nach Einsatz des Pleuels in den Kolben durch plastische Verformung des Kolbenhemds erzeugt werden. Eine solche Herstellung ist besonders wirtschaftlich, da keine zusätzlichen Einzelteile oder weitere spanenden Bearbeitungen am Kolben erforderlich sind.

Wird auf eine gute Zugänglichkeit des Lagers zwischen Kolben und Pleuel Wert gelegt, so kann eine Ausführung zur Anwendung gelangen, bei der ein mittels Federring gesicherter Keilring in der Ausnehmung des Kolbens vorgesehen ist, der die Kugelzone des Pleuels innerhalb des Kolbens formschlüssig sichert.

Bei der Ausführungsform nach Anspruch 8 bildet die Außenfläche der Kugelzone des Pleuels zusammen mit dem zylindrischen Teil der Ausnehmung im Kolben eine Spaltdichtung. Diese Dichtung arbeitet nahezu reibungs- und verschleißfrei und ist insbesondere in Kombination mit den Merkmalen des Anspruchs 7 sinnvoll da durch plastische Verformung des Kolbenhemds ein nachträglicher Ausbau des Pleuels aus dem Kolben, wie es beispielsweise zur Erneuerung einer Dichtung erforderlich ist, nicht oder nur sehr schwer möglich ist.

Statt einer Spaltdichtung kann gemäß den Ansprüchen 10 oder 11 auch ein Dichtring, beispielsweise nach Art eines Kolbenrings in einer Nut der Kugelzone oder einer Ringnut in der Ausnehmung vorgesehen sein. Der Dichtring kann je nach Einsatz der Maschine aus Gummi, Kunststoff, Metall oder einem anderen geeigneten Material bestehen. Eine solche Ausbildung ist insbesondere bei höheren Arbeitsdrücken und größeren Kolbendurchmessern vorteilhaft. Bei Anordnung des Dichtrings in der Kugelzone ist die Außenfläche des Dichtrings vorteilhaft ebenfalls kugelzonenförmig ausgebildet. Bei der Anordnung innerhalb der Ausnehmung des Kolbens wird dagegen die Innenfläche des Dichtrings bevorzugt zylindrisch ausgebildet, um die Dichtwirkung in jeder Stellung des Pleuels zu gewährleisten. Sie kann ggf. aber auch sphärisch ausgebildet sein.

Zur Versorgung des Pleuellagers an der Kurbelwelle oder an einem Exzenter mit Schmierstoff und zur Druckentlastung dieses Pleuellagers wird bei Kolbenmaschinen dieser Art üblicherweise Hydraulikmedium vom Zylinderraum durch Kanäle im Kolben und im Pleuel zugeführt. Bei der erfindungsgemäßen Ausbildung ist in jedem Falle zur Druckentlastung des Kolbens eine Verbindung zwischen dem Zylinderraum und dem Hohlraum im Kolben vorhanden, die nach Anspruch 11 vorteilhaft durch eine exzentrisch zur Kolbenachse angeordnete Bohrung im Kolbenboden gebildet ist.

Dieser Kanal kann gemäß Anspruch 12 gleichzeitig zur Schmiermittelzufuhr dienen, wenn eine Nut innerhalb der kugelförmigen Lagerfläche des Pleuels vorgesehen ist, in die ein zentraler Kanal des Pleuels mündet, der seinerseits mit dem Pleuellager in Verbindung steht.

Statt einer solchen Nut kann nach Anspruch 13 auch eine zentrale Bohrung im Kolbenboden vorgesehen sein, die direkt in den Axialkanal des Pleuels mündet. Hierzu muß der Kanal innerhalb des Pleuels so groß sein, mindestens jedoch der Übergang zwischen der Bohrung im Kolbenboden und dem Kanal im Pleuel so erweitert sein, daß in jeder Stellung des Pleuels eine fluidleitende Verbindung gewährleistet ist.

Der zentrale Kanal im Pleuel mündet in ein Pleuellager, das durch eine stirnseitige Ausnehmung im Pleuelschuh gebildet ist. Hierdurch wird nicht nur eine einwandfreie Schmierung des Pleuellagers gewährleistet, sondern es wird zudem eine wirksame Entlastung zwischen dem Pleuel und dem Exzenter erzeugt, da mit steigender Belastung des Pleuels auf den Exzenter auch der Druck des Arbeitsmediums innerhalb der Ausnehmung steigt, wodurch die Reibung innerhalb des Pleuellagers in tolerierbaren Grenzen gehalten wird.

Die erfindungsgemäße Kolbenmaschine weist im Vergleich zu bekannten Maschinen dieser Art einen erhöhten Wirkungsgrad auf, da Reibungskräfte zwischen Kolben und Pleuel durch direkte Druckbeaufschlagung des Pleuels erheblich vermindert werden. Sie kann mit fertigungstechnisch verhältnismäßig einfachen Mitteln hergestellt werden, da keine extremen Anforderungen an Toleranzen gestellt sind. Die eingangs erwähnten Parallelitätsfehler zwischen Pleuelauge und Kurbelwellenachse treten hier nicht auf. Fertigungsungenauigkeiten werden durch das Kugelgelenk zwischen Kolben und Pleuel wirksam ausgeglichen. Die erfindungsgemäße Anordnung ist für Kolbendurchmesser ab 20 mm wirtschaftlich. Die Erfindung ist bei zahlreichen hydraulischen Kolbenmaschinen, wie beispielsweise Kolbenmaschinen mit Taumelwellenverstellung einsetzbar.

Die Erfindung ist nachfolgend anhand von in den Zeichnungen veranschaulichten Ausführungsbeispielen näher erläutert. Es zeigen:

Figur 1 in schematischer Darstellung einen Längsschnitt durch einen Zylinder und einen Kolben einer hydraulisch beaufschlagbaren Radialkolbenmaschine mit Anlage des Pleuels an einem Kurbelwellenexzenter;

Figur 2 eine weitere Ausführungsform der Verbindung eines Pleuels mit einem Kolben einer hydraulisch beaufschlagbaren Radialkolbenmaschine und

Figur 3 eine dritte Ausführungsform einer solchen Verbindung.

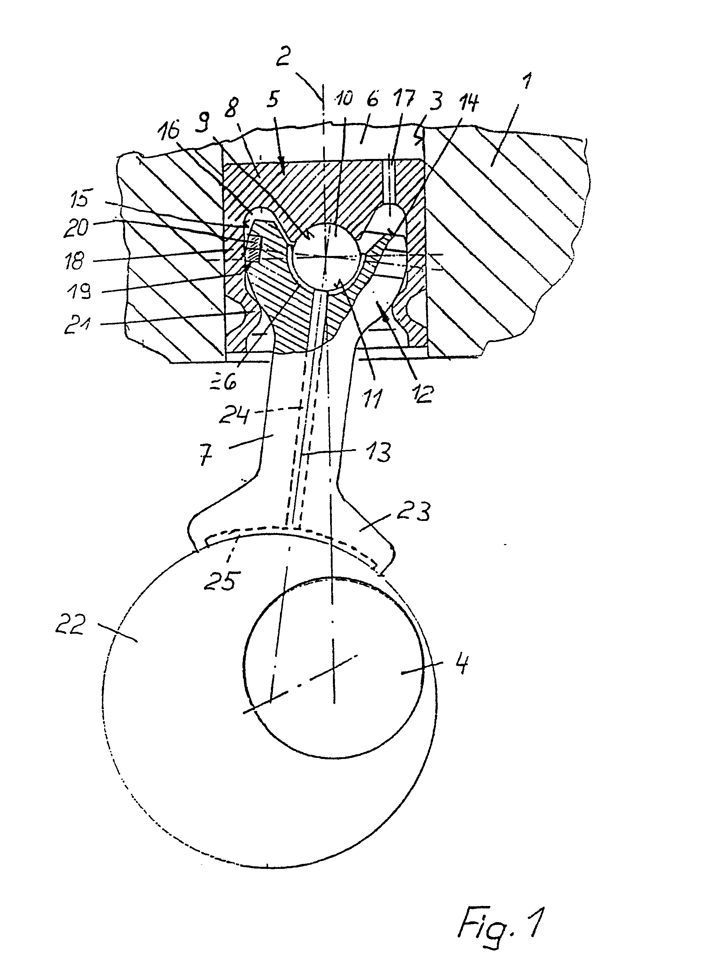

Die Figuren 1 bis 3 zeigen jeweils einen Teil einer hydraulisch beaufschlagbaren Radialkolbenmaschine, die mehrere radial zu einer Kurbelwelle 4 angeordnete Zylinder 3 aufweist. Es ist jeweils das Maschinengehäuse 1 im Bereich der Zylinderachse 2 im Längsschnitt dargestellt. Gleiche Teile in den Figuren sind mit gleichen Bezugszeichen gekennzeichnet.

Die in Figur 1 dargestellte Ausführungsform weist ein Maschinengehäuse 1 auf, in dem eine zylindrische Bohrung 3 - im folgenden kurz Zylinder genannt - angeordnet ist. Der Zylinder 3 ist zu der senkrecht zur Zylinderachse 2 angeordneten Kurbelwelle 4 hin offen ausgebildet und führt einen Kolben 5, der in Richtung der Zylinderachse 2 beweglich ist. Auf der von der Kurbelwelle 4 abgewandten Seite des Kolbens 5 bildet der Zylinder 3 einen Zylinderraum 6, der mit Hydraulikflüssigkeit beaufschlagbar ist. Der Zylinderraum 6 bildet den eigentlichen Arbeitsraum der Maschine.

Der im Querschnitt etwa becherförmige Kolben 5 ist über ein Pleuel 7 an einem mit der Kurbelwelle 4 verbundenen Exzenter 22 abgestützt. Der Kolbenboden 8 des Kolbens 5 weist eine zum Pleuel 7 hin offene Kugelpfanne 9 auf, in der eine Stützkugel 10 gelagert ist. Die Stützkugel 10 ist ferner in einer der Kugelpfanne 9 gegenüberliegenden Kugelpfanne 11 am kolbenseitigen Ende des Pleuels 7 gelagert, so daß das Pleuel 7 in allen Richtungen um den Kugelmittelpunkt schwenkbar ist, der vorteilhaft auf der Zylinder- und Kolbenachse 2 liegt. Die Kugelpfanne 11 ist in einer Kugelzone 12 in dem zum Kolben 5 weisenden Ende des Pleuels 7 symmetrisch zur Längsachse 13 ausgebildet. Die Kugelzone 12 umgreift nahezu die gesamte Stützkugel 10 und die Kugelpfanne 9 im Kolben 5. Sie ist konzentrisch zur Stützkugel 10 und zur Kugelpfanne 11 angeordnet. Die Kugelpfanne 11 ist durch eine Ausnehmung an der kolbenseitigen Endseite der Kugelzone 12 gebildet. Der Rand der Kugelpfanne 11 ist nach außen konisch aufgeweitet und endet in einer flachen, dem Kolbenboden 8 zugewandten Stirnseite 14 des Pleuels 7, bzw. der Kugelzone 12. Die äußere Kante der Stirnseite 14 bildet den Übergang zur kugelförmigen Außenfläche der Kugelzone 12, die sich von der Stirnseite 14 zunächst bis zu ihrem vollen Durchmesser aufweitet, um dann bündig in das Pleuel 7 überzugehen.

Die Kugelzone 12 des Pleuels 7 liegt dichtend an der zumindest im Bereich der Kugelzone 12 zylindrischen Ausnehmung 15 im Kolben 5. Durch die dichtende Anlage der Kugelzone 12 an der Innenseite der Ausnehmung 15 wird ein Hohlraum 16 zwischen dem Kolben 5 und der Kugelzone 12 gebildet, der über eine Bohrung 17 im Kolbenboden 8 mit dem Zylinderraum 6 fluidleitend verbunden ist. Die Bohrung 17 ist exzentrisch zur Zylinderachse 2 angeordnet. Durch die Bohrung 17 wird erreicht, daß im Hohlraum 16 der gleiche Druck wie im Zylinderraum 6 des Zylinders 3 herrscht, wodurch die Kraft auf den Kolben 5 erheblich vermindert wird. Da der Kolbenboden 8 über den gesamten Querschnitt der Kugelzone 12 beidseitig druckbeaufschlagt ist, wirkt lediglich eine Restkraft auf den Kolben 5, die sich wie folgt errechnet:

$$F_{Rest} = \frac{\pi}{4} (D^2 - d^2) \cdot \rho \qquad (1)$$

Dabei ist

$D$ = Kolbendurchmesser,

$F_{Rest}$ = die auf den Kolben 5 wirkende Kraft (Restkraft),

$d$ = Durchmesser der zylindrischen Ausnehmung 15,

$\rho$ = Druck im Zylinderraum 6.

Die übrige, in Richtung auf die Kurbelwelle 4 wirkende Kraft wird nicht vom Kolben 5, sondern direkt vom Pleuel 7 aufgenommem, sie ergibt sich wie folgt:

$$F_{pl} = \frac{\pi}{4} d^2 \cdot \rho \qquad (2)$$

Dabei ist

$F_{pl}$ = die direkt auf das Peuel 7 wirkende Kraft.

Zur Verdeutlichung sei darauf hingewiesen, daß bei bekannten Maschinen dieser Art die vom Kolben zu übertragende Kraft erheblich größer ist, nämlich

$$F = F_{Rest} + F_{PL} \qquad (3)$$

Dadurch, daß nunmehr ein Großteil der Kraft durch das Pleuel 7 unter Umgehung des Kolbens 5 direkt auf die Kurbelwelle 4 übertragen wird, hat das Kugelgelenk 9, 10, 11 nur noch geringe Kräfte aufzunehmen. Hierdurch wird die Flächenpressung innerhalb dieses Gelenks 9 - 11 und damit auch der Reibungsverlust erheblich verringert, was zu einem höheren Wirkungsgrad und zu einer höheren Lebensdauer der Maschine beiträgt. Wie nachträgliche Berechnungen ergeben haben, konnte im Vergleich zu herkömmlichen Konstruktionen mit sphärischem Schwenklager eine Reduzierung der Flächenpressung in der kugelförmigen Berührungsfläche von mehr als 30 % erzielt werden, wobei der Durchmesser der kugelförmigen Lagerflächen zur Verminderung des Reibradius relativ klein gestaltet werden kann.

Während die kugelförmig ausgebildeten Berührungsflächen 9, 10, 11 zur Führung des unter Druck stehenden Pleuels 7 im Kolben 5 dienen, ist die Außenfläche der Kugelzone 12 ausschließlich zur dichtenden Anlage an der Ausnehmung 15 im Kolben 5 vorgesehen. Bei der in Figur 1 dargestellten Ausführungsform weist die Kugelzone 12 eine konzentrisch zur Längsachse 13 des Pleuels 7 angeordnete Ringnut 19 auf, in der ein Dichtring 20 angeordnet ist. Der Dichtring 20 weist eine kugelzonenförmige Außenfläche auf, die dichtend in der Ausnehmung 15 anliegt. Der Dichtring 20 kann nach Art eines Kolbenrings oder in anderer geeigneter Weise, z. B. als Gummi-, Kunststoff- oder Metallteil ausgebildet sein.

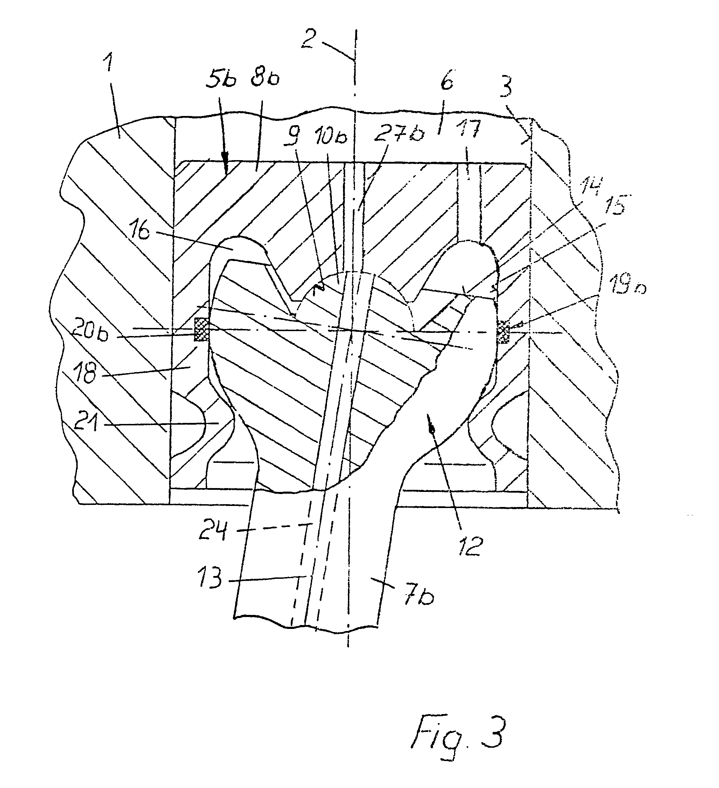

Statt des in der Ringnut 19 angeordneten Dichtrings 20 kann auch, wie in Figur 3 dargestellt ist, eine Ringnut 19b im Kolbenhemd 18 vorgesehen sein, in der ein Dichtring 20b angeordnet ist. Der Dichtring 20b weist dann eine zylindrische Innenfläche zur Abdichtung gegenüber der Kugelzone 12 auf.

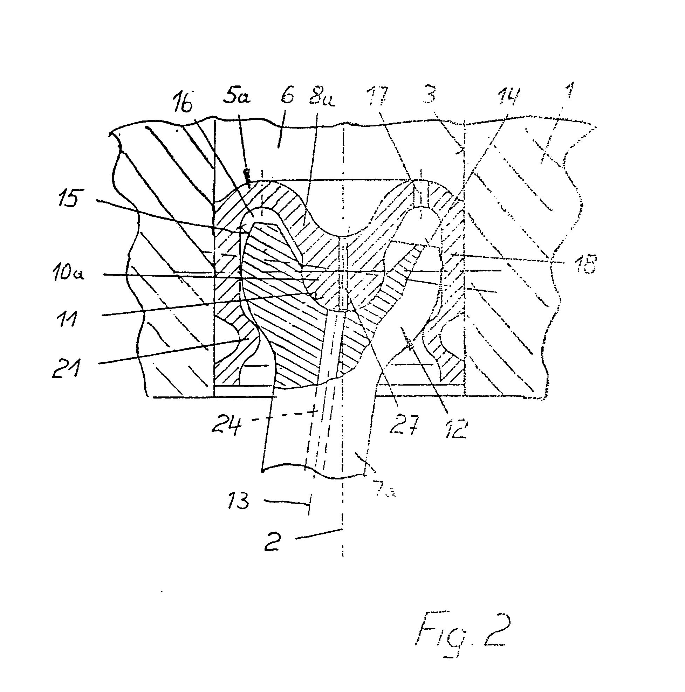

Statt eines Dichtrings kann die Abdichtung zwischen Ausnehmung 15 und Kugelzone 12 aber auch durch eine Spaltdichtung erfolgen, wie sie in Figur 2 dargestellt ist. Eine solche Ausbildung bietet die Vorteile einer berührungsfreien Dichtung, wie beispielsweise geringer Verschleiß und geringe Reibung. Sie ist aufgrund der höheren Leckagen bei kleinen Arbeitsdrücken im Zylinderraum 6 und kleinem Kolbendurchmesser von Vorteil.

Um ein Abheben des Pleuels 7 vom Kolben 5 zu vermeiden, ist bei allen dargestellten Ausführungsformen jeweils ein Ringwulst 21 im Kolbenhemd 18 vorgesehen, der die Ausnehmung 15 zum kurbelseitigen Ende des Kolbens 5 hin verjüngt, so daß die Kugelzone 12 des Pleuels 7 formschlüssig innerhalb der Ausnehmung 15 gehalten ist. Der Ringwulst 21 ist durch plastische Verformung des Kolbenhemds 18 nach Einsetzen der Kugelzone 12 (einschl. der Kugel 10 bei der Ausführung nach Figur 1) gebildet.

Wie Figur 1 zeigt, liegt das kurbelseitige Ende des Pleuels 7 am Außenumfang eines Exzenters 22 gleitend an. Zur Druckentlastung und Schmierung ist die Anlagefläche des Pleuelschuhs 23 mit einer Ausnehmung 25 versehen, die über einen zentralen, koaxial zur Pleuelachse 13 verlaufenden Kanal 24 und eine Nut 26 in der Kugelpfanne 11 mit dem Hohlraum 16 und folglich mit dem Zylinderraum 6 verbunden ist. Hierdurch wird gewährleistet, daß bei steigendem Druck im Zylinderraum 6 - wobei die vom Pleuel 7 auf den Exzenter 22 zu übertragende Kraft ansteigt - auch ein entsprechend höherer Schmiermitteldruck zwischen dem Pleuelschuh 23 und dem Exzenter 22 herrscht. Durch den dann entsprechend höheren hydrostatischen Druck kann eine höhere Kraft reibungsarm übertragen werden.

Bei der Ausführungsform nach Figur 1 gelangt das Arbeitsmedium vom Zylinderraum 6 über die Bohrung 17 in den Hohlraum 16, von da über die Nut 26 in der Kugelpfanne 11 zur Mündung des Kanals 24. Die hydrostatische Lagerung zwischen dem Exzenter 22 und Pleuel 7 ist in dieser Ausführung schwimmend - Pleuel 7 liegt am Exzenter 22 an -. Sie kann in ähnlicher Weise auch bei einem Pleuel erfolgen, das fest über ein Pleuelauge mit einer Kurbelwelle verbunden ist.

Bei der Ausführung nach Figur 2 ist das Pleuel 7a mit Kugelzone 12 im wesentlichen gleich wie das in Figur 1 dargestellte und oben beschriebene Pleuel 7 ausgebildet. Die Gelenkverbindung zwischen dem Kolben 5a und Pleuel 7a unterscheidet sich aber insoweit, als daß am Kolbenboden 8a ein zur Kurbelwelle 4 weisender kugelförmiger Zapfen 10a angeformt ist, der von der Kugelzone 12 des Pleuels 7a in gleicher Weise wie die Stützkugel 10 in Figur 1 umfaßt wird. Die Wirkungsweise, insbesondere hinsichtlich der Kraftverteilung auf Kolben 5a und Pleuel 7a, ist die gleiche wie vorbeschrieben. Wie der Schnitt nach Figur 2 zeigt, ist der Kolbenboden 8a zum Zylinderraum 6 hin nicht eben, sondern fällt zum Rand und zur Mitte hin ab.

In Figur 2 ist weiterhin eine alternative Schmiermittelzuführung durch eine zentrale Bohrung 27 im Kolbenboden 8a vorgesehen. Die Bohrung 27 mündet direkt in den Kanal 24 des Pleuels 7a. Es sei erwähnt, daß der Kanal 24 und die Bohrung 27 einen genügend großen Durchmesser aufweisen müssen, damit sie auch bei Schwenkbewegungen des Pleuels 7a um den Zapfen 10a fluidleitend verbunden bleiben, um eine Schmiermittelversorgung des Lagers zwischen Pleuel 7a und Exzenter 22 zu gewährleisten. Bei kleinerem Durchmesser des Kanals 24 und der Bohrung 27 kann dies aber auch durch entsprechendes Aufweiten im Mündungsbereich erreicht werden.

Figur 3 zeigt eine Ausführungsform, bei der der Kolben 5b im wesentlichen wie in Figur 1 ausgebildet ist, also eine im Kolbenboden 8b zur Kurbelwelle 4 weisende Kugelpfanne 9 aufweist. Das Pleuel 7b weist einen kugelförmigen Zapfen 19b auf, der in der Kugelpfanne 9 des Kolbens 5b gelagert ist. Auch hier ist die Wirkungsweise bezüglich der Kräfteverteilung auf Kolben 5b und Pleuel 7b wie vorbeschrieben. Die Kugelzone 12 ist wie bei den vorhergehenden Ausführungsformen konzentrisch zu den kugelförmigen Lagerflächen 9, 10b angeordnet und übernimmt lediglich eine Dichtfunktion zum Kolben 5b hin. Die Führung des Pleuels 7b innerhalb des Kolbens

5b erfolgt über den kugelförmigen Zapfen 10b und die Kugelpfanne 9.

Die Druckmittelzuführung ist bei der Ausführung nach Figur 3 ähnlich wie bei der vorhergehenden durch eine zentrale Bohrung 27b im Kolbenboden 8b gebildet, die innerhalb des Gelenks 9, 10b in den zum Pleuellager 25 führenden Kanal 24 mündet.

## Bezugszeichenaufstellung

 1 Maschinengehäuse
 2 Zylinderachse
 3 Zylinder
 4 Kurbelwelle
 5 Kolben
 6 Zylinderraum
 7 Pleuel
 8 Kolbenboden
 9 Kugelpfanne in 8
10 Stützkugel
11 Kugelpfanne in 12
12 Kugelzone
13 Längsachse v. 7
14 Stirnseite v. 12
15 Zylindrische Ausnehmung in 5
16 Hohlraum zw. 5 u. 7
17 Bohrung in 5
18 Kolbenhemd
19 Ringnut in 12
20 Dichtring
21 Ringwulst an 18
22 Exzenter
23 Pleuelschuh
24 Kanal in 7
25 Pleuellager in 23
26 Nut in 11
27 Bohrung in 8a

D       Kolbendurchmesser
$F_{Rest}$   die auf den Kolben 5 wirkende Kraft
d       Durchmesser der Ausnehmung 15
P       Druck im Zylinderraum 6
$F_{p1}$    die direkt auf das Pleuel 7 wirkende Kraft

 5a   Kolben
 5b    "
 7a   Pleuel
 7b    "
 8a   Kolbenboden
 8b    "
10a   Kugelzapfen
10b    "
19b   Ringnut in 18
20b   Dichtring
27b   Axialbohrung in 5b

## Patentansprüche

1. Kolbenmaschine, insbesondere hydraulisch beaufschlagbare Kolbenmaschine, mit mindestens einem Zylinder (3), in dem ein Kolben (5; 5a; 5b) axial beweglich geführt ist, der über ein Pleuel (7; 7a; 7b) mit einer Kurbelwelle (4) oder dergleichen verbunden ist, wobei Pleuel (7; 7a; 7b) und Kolben (5; 5a; 5b) über eine kugelförmige Lagerfläche (9, 10, 11; 10a, 11; 9, 10b) gelenkig miteinander verbunden sind, *dadurch gekennzeichnet,* daß das Pleuel (7; 7a; 7b) eine konzentrisch zur kugelförmigen Lagerfläche (9, 10, 11; 10a, 11; 9, 10b) angeordnete Kugelzone (12) aufweist, die dichtend in einer Ausnehmung (15) des Kolbens (5; 5a; 5b) einliegt und einen Hohlraum (16) im Kolben (5; 5a; 5b) begrenzt, der mit dem Zylinderraum (6) fluidleitend verbunden ist.

2. Kolbenmaschine nach Anspruch 1, *dadurch gekennzeichnet,* daß sowohl der Kolben (5) als auch das Pleuel (7) jeweils eine Kugelpfanne (9, 11) aufweisen, in welche eine gemeinsame Stützkugel (10) abstützend eingreift (Fig. 1).

3. Kolbenmaschine nach Anspruch 1, *dadurch gekennzeichnet,* daß der Kolben (5a) einen kugelförmigen Zapfen (10a) aufweist, der in eine Kugelpfanne (11) des Pleuels (7a) eingreift (Fig. 2).

4. Kolbenmaschine nach Anspruch, *dadurch gekennzeichnet,* daß das Pleuel (7b) einen kugelförmigen Zapfen (10b) aufweist, der in eine Kugelpfanne (9) des Kolbens (5b) eingreift (Fig. 3).

5. Kolbenmaschine nach einem der Ansprüche 1 bis 4, *dadurch gekennzeichnet,* daß die Ausnehmung (15) im Kolben (5; 5a; 5b) im Bereich der Kugelzone (12) des Pleuels (7; 7a; 7b) zylindrisch ausgebildet ist.

6. Kolbenmaschine nach einem der Ansprüche 1 bis 5, *dadurch gekennzeichnet,* daß der Kolben (5; 5a; 5b) im Bereich seines Kolbenhemds (18) einen an der Innenwandung der Ausnehmung (15) vorgesehenen Ansatz (21) zur formschlüssigen Festlegung des Pleuels (7: 7a; 7b) im Kolben (5; 5a; 5b) aufweist.

7. Kolbenmaschine nach Anspruch 6, *dadurch gekennzeichnet,* daß der Ansatz (21) durch einen Ringwulst (21) gebildet ist.

8. Kolbenmaschine nach einem der Ansprüche 1 bis 7, *dadurch gekennzeichnet,* daß die Kugelzone (12) des Pleuels (7a) zusammen mit dem zylindrischen Teil der Ausnehmung (15) des Kolbens (5a) eine Spaltdichtung bildet.

9. Kolbenmaschine nach einem der Ansprüche 1 bis 7, *dadurch gekennzeichnet,* daß das Pleuel (7) am Außenumfang seiner Kugelzone (12) eine Ringnut (19) aufweist, in der ein Dichtring (20) angeordnet ist, dessen Außenfläche etwa kugelzonenförmig ausgebildet ist (Fig. 1).

10. Kolbenmaschine nach einem der Ansprüche 1 bis 7, *dadurch gekennzeichne,* daß der Kolben (5b) im Bereich seiner zylindrischen Ausnehmung (15) eine Ringnut (19b) aufweist, in der eine ringförmige Dichtung (20b) mit zylindrischer Innenfläche angeordnet ist (Fig. 3).

11. Kolbenmaschine nach einem der Ansprüche 1 bis 10, *dadurch gekennzeichnet*, daß die Leitungsverbindung zwischen dem Hohlraum (16) und dem Zylinderraum (6) durch eine Bohrung (17) im Kolbenboden (8; 8a; 8b) gebildet ist, die in Bezug auf die Kolbenachse (2) exzentrisch angeordnet ist.

12. Kolbenmaschine nach einem der Ansprüche 1 bis 11, bei der eine Schmiermittelverbindung zwischen dem vom Pleuel abgewandten Teil des Zylinders und dem Pleuelschuh durch Kolben und Pleuel vorgesehen ist, *dadurch gekennzeichnet*, daß eine Nut (26) in der kugelförmigen Lagerfläche (10, 11) vorgesehen ist, die über einen zentralen Kanal (24) im Pleuel (7) mit einer Ausnehmung (25) im Pleuelschuh (23) im Bereich seiner Auflage am Exzenter (22) verbunden ist.

13. Kolbenmaschine nach einem der Ansprüche 1 bis 11, bei der eine Schmiermittelverbindung zwischen dem vom Pleuel abgewandten Teil des Zylinders und dem Pleuelschuh durch Kolben und Pleuel vorgesehen ist, *dadurch gekennzeichnet*, daß ein Kanal (24) im Pleuel (7a, 7b) über eine Axialbohrung (27b) im Kolbenboden (8a, 8b) mit dem Zylinderraum (6) verbunden ist.

**Claims**

1. A piston machine, more particularly a hydraulically energized piston machine, having at least one cylinder (3) in which a piston (5; 5a; 5b) is guided for axial movement, the piston being connected by way of a connecting rod (7; 7a; 7b) to a crankshaft (4) or the like, the connecting rod (7; 7a; 7b) and the piston (5; 5a; 5b) being pivotally interconnected by way of a spherical bearing surface (9, 10, 11; 10a, 11; 9, 10b), characterised in that the connecting rod (7; 7a; 7b) has a spherical zone (12) which is disposed concentrically of the spherical bearing surface (9, 10, 11; 10a, 11; 9, 10b), engages sealingly in a recess (15) in the piston (5; 5a; 5b) and bounds therein a cavity (16) in fluid-conducting relationship with the cylinder chamber (6).

2. A machine according to claim 1, *characterised in that* the piston (5) and connecting rod (7) each have a spherical socket (9, 11) in which a common bearing ball (10) engages bearingly (Fig. 1).

3. A machine according to claim 1, *characterised in that* the piston (5a) has a spherical pin (10a) which engages in a spherical socket (11) in the connecting rod (7a) (Fig. 2).

4. A machine according to claim 1, *characterised in that* the connecting rod (7b) has a spherical pin (10b) which engages in a spherical socket (9) in the piston (5b) (Fig. 3).

5. A machine according to any of claims 1 - 4, *characterised in that* the recess (15) in the piston (5; 5a; 5b) is cylindrical near the spherical zone (12) of the connecting rod (7; 7a, 7b).

6. A machine according to any of claims 1 - 5, *characterised in that* the piston (5; 5a; 5b) has near its skirt (18) a projection (21) which is disposed on the inner wall of the recess (15) and which is effective to provide a positive securing of the connecting rod (7; 7a; 7b) in the piston (5; 5a; 5b).

7. A machine according to claim 6, *characterised in that* the projection (21) is in the form of an annular bead (21).

8. A machine according to any of claims 1 - 7, *characterised in that* the spherical zone (12) of the connecting rod (7a) co-operates with the cylindrical part of the recess (15) of the piston (5a) to form a gap seal.

9. A machine according to any of claims 1 - 7, *characterised in that* the connecting rod (7) is formed on the outer periphery of its spherical zone (12) with an annular groove (19) receiving a ring seal (20) whose outside surface is substantially inspherical zone form (Fig. 1).

10. A machine according to any of claims 1 - 7, *characterised in that* the piston (5b) is formed near its cylindrical recess (15) with an annular groove (19b) receiving a ring seal (20b) having a cylindrical inside surface (Fig. 3).

11. A machine according to any of claims 1 - 10, *characterised in that* the fluid-conducting relationship between the cavity (16) and the cylinder chamber (6) is in the form of a bore (17) which is disposed in the piston crown (8; 8a; 8b) and is eccentric of the piston axis (2).

12. A machine according to any of claims 1 - 11 in which there is a lubricant connection between the cylinder part remote from the connecting rod and the connecting-rod shoe through the piston and the connecting rod, *characterised in that* the spherical bearing surface (10, 11) is formed with a groove (26) communicating by way of a central duct (24) in the connecting rod (7) with a recess (25) in the shoe (25) near its place of engagement with the eccentric (22).

13. A machine according to any of claims 1 - 11 in which there is a lubricant connection between the cylinder part remote from the connecting rod and the shoe thereof through the piston and the connecting rod, *characterised in that* a duct (24) in the connecting rod (7a, 7b) communicates by way of an axial bore (27b) in the piston crown (8a, 8b) with the cylinder chamber (6).

## Revendications

1. Machine à piston, notamment machine à piston actionnable hydrauliquement, avec au moins un cylindre (3) dans lequel est mené un piston (5 ; 5a ; 5b) mobile axialement, qui est relié par une bielle (7 ; 7a ; 7b) à un arbre vilebrequin (4) ou similaire, la bielle (7 ; 7a ; 7b) et le piston (5 ; 5a ; 5b) étant reliés ensemble de façon articulée par une surface de portée sphérique (9, 10, 11 ; 10a, 11 ; 9, 10b), *caractérisée en ce que* la bielle (7 ; 7a ; 7b) présente une zone sphérique (12) agencée concentriquement par rapport à la surface de portée sphérique (9, 10, 11 ; 10a, 11 ; 9, 10b), zone sphérique qui est logée de façon étanche dans un évidement (15) du piston (5 ; 5a ; 5b) et délimite une zone creuse (16) dans le piston (5 ; 5a ; 5b) qui est reliée de façon conductrice de fluide avec la chambre du cylindre (6).

2. Machine à piston selon la revendication 1, *caractérisée en ce que* aussi bien le piston (5) que la bielle (7) présentent respectivement un coussinet sphérique ou rotule (9, 11) dans laquelle s'engage en appui une bille d'appui commune (10) (figure 1).

3. Machine à piston selon la revendication 1, *caractérisée en ce que* le piston (5a) présente un tourillon sphérique (10a) qui s'engage dans un coussinet sphérique ou rotule (11) de la bielle (7a) (figure 2).

4. Machine à piston selon la revendication 1, *caractérisée en ce que* la bielle (7b) présente un tourillon sphérique (10b) qui s'engage dans un coussinet sphérique ou rotule (9) du piston (5b) (figure 3).

5. Machine à piston selon l'une des revendications 1 à 4, *caractérisée en ce que* l'évidement (15) dans le piston (5 ; 5a ; 5b) est formé cylindriquement au niveau de la zone sphérique (12) de la bielle (7 ; 7a ; 7b).

6. Machine à piston selon l'une des revendications 1 à 5, *caractérisée en ce que* le piston (5 ; 5a ; 5b) au niveau de sa chemise (18) présente un appendice (21) prévu sur la paroi intérieure de l'évidement (15) pour la fixation à engagement positif de la bielle (7 ; 7a ; 7b) dans le piston (5 ; 5a ; 5b).

7. Machine à piston selon la revendication 6, *caractérisée en ce que* l'appendice (21) est formé par une collerette (21).

8. Machine à piston selon l'une des revendications 1 à 7, *caractérisée en ce que* la zone sphérique (12) du piston (7a) conjointement avec la partie cylindrique de l'évidement (15) du piston (5b) forme une boîte à labyrinthe.

9. Machine à piston selon l'une des revendications 1 à 7, *caractérisée en ce que* la bielle (7) présente sur la périphérie extérieure de sa zone sphérique (12) une rainure annulaire (19) dans laquelle est agencée une bague d'étanchéité (20) dont la surface extérieure est formée quasiment selon la forme d'une zone sphérique (figure 1).

10. Machine à piston selon l'une des revendications 1 à 7, *caractérisée en ce que* le piston (5b) présente au niveau de son évidement cylindrique (15) une rainure annulaire (19b) dans laquelle est agencée une étanchéité en forme de bague (20b) avec une surface intérieure cylindrique (figure 3).

11. Machine à piston selon l'une des revendications 1 à 10, *caractérisée en ce que* la liaison de conduite entre la chambre creuse (16) et la chambre de cylindre (6) est formée par un alésage (17) dans le fond du piston (8 ; 8a ; 8b) qui est agencé excentriquement par rapport à l'axe de piston (2).

12. Machine à piston selon l'une des revendications 1 à 11, dans laquelle un raccord de graisseur est prévu entre la partie détournée de la bielle du cylindre et la semelle de la bielle par le piston et la bielle, *caractérisée en ce qu'une* rainure (26) est prévue dans la surface de portée sphérique (10, 11), qui est reliée par un canal central (24) dans la bielle (7) avec un évidement (25) dans la semelle de bielle (23) au niveau de son appui sur l'excentrique (22).

13. Machine à piston selon l'une des revendications 1 à 11, dans laquelle un raccord de graissage est prévu entre la partie détournée de la bielle du cylindre et la semelle de bielle à travers le piston et la bielle, *caractérisée en ce qu'un* canal (24) dans la bielle (7a, 7b) est relié par un alésage axial (27b) dans le fond du piston (8a, 8b) avec la chambre de cylindre (6).

Fig. 1

Fig. 2

Fig. 3